# EUROPEAN PATENT APPLICATION

(11) **EP 0 692 709 A1**
(43) Date of publication of application: **17.01.1996**
(21) Application number: 95304820.4
(22) Date of filing: 11.07.1995
(51) Int. Cl.: G01N 21/64, E21B 49/00

(54) **Device for detecting and analysing residual oil in coring samples and use of such device**

(30) Priority: 11.07.1994 NO 942591
(71) Applicant: INSTITUTT FOR ENERGITEKNIKK, N-2007 Kjeller (NO)
(72) Inventor: Kihle, Jan, N-1084 Oslo (NO); Throndsen, Thorbjorn, N-2009 Norway (NO)
(74) Representative: Price, Paul Anthony King

(57) **Abstract**

A device for detecting and analysing residual oil in corings is operatively adapted for illuminating samples (4a) from corings with shortwave light in order to produce excited electron transitions in chemical components of possible oil in the samples, and thereby actuate these components to emit fluorescence light having greater wavelength than the exciting light. The device comprises en optical excitation fiber cable (2a) and an optical emission fiber cable (2b), each being directed at one end towards a selected area of the coring sample. Transmitter equipment (1c, 1d, 1e) is disposed to generate and emit to the other end of the excitation fiber cable monochromatic short wave light for transmission through this fiber cable (2a), and irradiation of said area for the purpose of exciting possible oil components within the area to emit fluorescence light, which may be taken up by said one end of emission fiber cable for transmission through this fiber cable (2b). Receiver equipment (1g, 1h, 1i, 1j, 1k) is disposed at the other end of the emission fiber cable for receiving the transferred fluorescence light through the emission fiber cable (2b), and operatively adapted for measuring the relative intensity of the light and analysing its emission spectrum, in order thereby to determine the amount and type of the detected oil within the area.

## Description

The present invention is related to a device for detecting and analysing residual oil in corings and adapted to illuminate samples from corings with shortwave light in order to generate excited electron transitions in chemical components of oil which may be present in the samples, and thereby actuate these components to emit fluorescence light having greater wavelength than the excitation light.

For oil companies it is of great importance to be able to detect at an early stage the presence of oil in coring samples. The residual oil in the coring may originate from domains which are in contact with reservoirs of economic importance. Also the oil may be from an earlier reservoir which now is empty (dry) or the detected oil may be local oil remnants in a migration path, being stuck on its passage from the formation area (source rock) towards a reservoir (reservoir rock).

Even now a method of this kind is used to detect presence of residual oil in corings by means of equipment traded under commercial name "AUTOCAR". This method involves illuminating the sample in question with broadband ultraviolet (UV) light, whereupon the sample is photographed by means of a camera. Both the camera and the UV-lightsource are permanently mounted on a bar, which is moveable in relation to a testtable on which the sample is situated. The sample may then be scanned along its whole extension, and photos taken at regular intervals. By comparing pictures of the same area with and without illumination with UV-light, it willappear that domains being rich in residual oil are emitting fluorescence light having colour yellow to orange under irradiation of said UV-light. Some "light" oil types are not detectable by means of this method and may then be overlooked. This is also the case if the oil appears in very small concentrations. In the cases where oil may be detected by means of this method, it would not be possible to determine whether it is one and the same type of oil in all the detections, or whether several types or generations of oil are present in different areas of the coring.

Thus, "AUTOCAR" would only be able to detect residual oil (presence or absence) in relatively high concentrations, and in that case only for "normal" or "heavy" oils.

On this background of prior art there is a need for a device of the type indicated above, in which the indicated disadvantages are overcome, so that it would not only be possible generally to detect oil in corings, but also to differenciate between different types of oil, even if the residual oil appears in very low concentrations.

This is achieved by means of a device as described above and comprising an optical excitation fiber cable directed at one end against a selected area of said coring sample, an optical emission fiber cable directed with one end against the same area, and transmitter means to generate and emit to the other end of the excitation fiber cable monochromatic shortwave light for transmission through this fiber cable and irradiation of said area in order to excite possible oil components within the area to emit fluorescence light, which may be received by said one end of emission fiber cable for transmission through this fiber cable, as well as receiver equipment disposed at the other end of the emission fiber cable for receiving the transferred fluorescence light through the emission fiber cable.

According to the invention the transmitter equipment comprises a light source that is able to emit broadband shortwave light and an adjustable excitation monochromator for taking out monochromatic light having selected wavelength from the supplied broadband light from said light source. Further according to the invention, the receiver equipment of the device comprises an adjustable emission monochromator for receiving the transferred fluorescence spectrum from the monitored area through the emission fiber cable and adapted for measuring the relative intensity of the light and analysing its emission spectrum, for thereby determining the amount and type of the detected oil within said area, by deducing the relative intensity of the fluorescent light at different wavelengths through scanning of the fluorescence spectrum. For controlling motorized adjustment of the excitation and/or emission monochromator the device preferably comprises a special motor controller.

The receiver equipment preferably comprises means for converting fluorescence light from the emission monochromator to analogue electric signals, e.g. a photo-multiplier. An interface unit may then be disposed to convert the analogue electric signals from the converter means into digital signals for processing, measuring and analysis in a data processing station, presenting results indicating the amount and type of the examined oil components on a monitor unit.

By quantization and optimization of both the energy causing fluorescence in oil (excitation spectrometry) and the fluorescence light energy (emission spectroscopy) by means of the two optical fiber cables and said connected equipment, it would not only be possible to detect small concentrations of residual oil, but also to determine different oil types and oil variants. The fluorescence measurements would then be performed by means of said fiber optics directly on the corings from sedimentary rocks, and the deduced fluorescence data may be used together with other non-destructive measurement data for rapidly and effectively pointing out stratigraphic sequences of critical importance for oil production. In this way it would be possible to detect and characterize by means of analysis that oil which possibly may be residually present in corings from sedimentary derived rock types. This technique is very sensitive and the measuring area may be screened down to the order of magnitude of 1 cm.

The invention also concerns different uses of the described device according to the invention, in which the excitation and emission monochromators are used in different ways. In order to determine fluorescence emission spectra, the excitation monochromator may for instance be set to different wavelength values in order to excite the test area in question successively by light of different wavelength, the emission monochromator being adjusted to different wavelength values for scanning the emission spectrum of the excited fluorescence light for each set excitation wavelength.

For determining fluorescence excitation spectra the emission monochromator may be set to a selected fixed wavelength for the fluorescent light, the excitation monochromator being adjusted to different wavelength values in order to excite the test area in question sequentially by light of different wavelengths and recording the relative intensity of the fluorescence light at the selected fixed wavelength by means of the receiver equipment for each value of the excitation wavelength.

Finally the device may be used for simultaneous recording of fluorescence spectra for both excitation and emission, in which the adjustments of both the excitation and emission monochromators are varied in synchronism by the motor controller, maintaining a constant difference in set quantum energy value or light wavelength between the two monochromators.

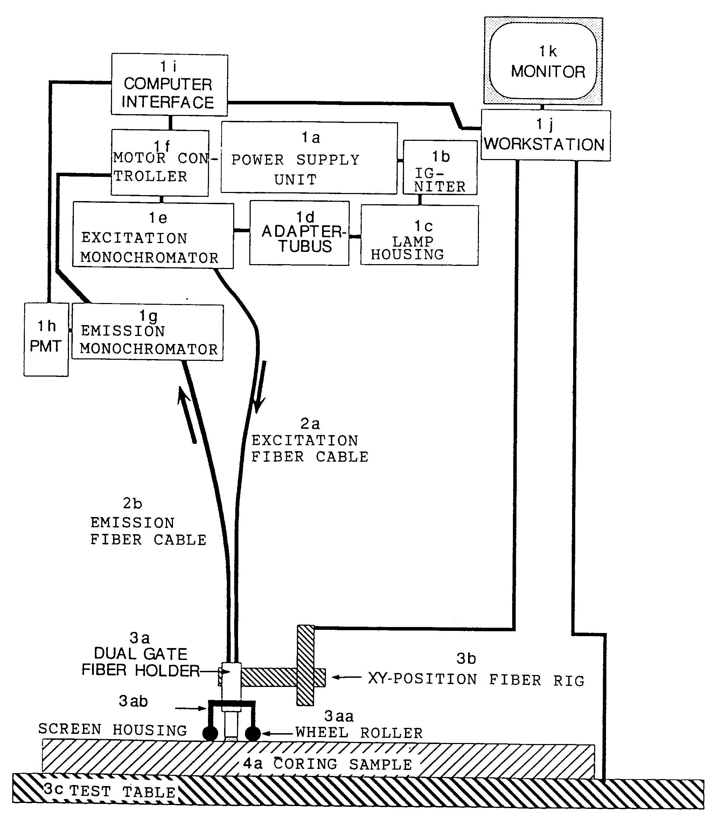

The invention is now to be explained in more detail with reference to the accompanying drawing, the only figure of which shows in block diagram form an exemplified embodiment of the device according to the invention for detecting and analysing oil remnants in corings.

In order to provide light of high intensity over a large range of wavelength a xenon burner is utilized as light source in a lamp housing 1c, which is activated from an associated current supply unit 1a through an electronic igniter lb. From the lamp housing the light beam is focused by means an optical adaptor (adaptor tubus) ld into a motorized excitation monochromator 1e. This monochromator picks out monochromatic light within a certain pre-set narrow wavelength range, which is supplied to one end of an excitation fiber cable 2a. This fiber cable is terminated in a fiber holder 3a made of brass and embedded in a non-fluorescing epoxy mass. In this fiber holder is also fixed one end of an emission fiber cable 2b, which is directed towards the same surface area of the coring sample 4a as the outer end of the excitation fiber cable 2a.

The other end of the emission fiber cable is connected with a motor controlled emission monochromator adapted for taking out from the emitted fluorescence light from the coring sample 4a a selected narrow wavelength range in accordance with the setting of the monochromator. The setting of both the excitation monochromator le and the emission monochromator 1g is controlled from a common motor controller 1f.

The restricted monochromatic fluorescence light in the emission monochromator 1g is supplied to converter means 1h, e.g. a photo multiplier (PMT), in order to convert the monochromatic light from the emission monochromator into analogue electric signals. Further, a interface unit 1i is disposed and adapted to convert the analogue electric signals from the converter means lh into digital signals in a data processor station 1j. The produced results in the data processing station are then displayed on a monitor 1k. By means of suitable interpretation of the characterizing features of the displayed results it is possible to disclose the amount and type of the examined oil components.

The ends of the excitation and emission fiber cables which are directed towards the coring sample are maintained a suitable distance from the coring 4a in one and the same fiber holder 3a, which is mounted in a screen housing 3ab disposed for movement along the surface of the coring sample. The fiber holder 3a is then disposed in a fiber rig 3b which is adapted to be controlled from the data processing station lj in all main directions (XYZ) in space, for the purpose of performing a complete and accurate scanning of the coring sample. A screening of the measuring area down to an order of magnitude of 1 cm may then be achieved.

In order to detect and analyse residual oil in situ in corings the device may be operated in different operation modes for the purpose of deriving oilspecies characterizing fluorescent spectra of both excitation and emission types, or possibly a combination of these. In certain applications of the device it is possible to determine fluorescence emission spectra for different set excitation wavelengths, the excitation monochromator le being adjusted to different wavelength values for the excitation of the test area that the fiber holder is directed to for the moment, sequentially with light of different wavelengths, whereas the emission monochromator 1g is set by the motor controller to different fluorescence wavelength values for the purpose of scanning the emission spectrum of the excited fluorescence light for each set excitation wavelength. The interface unit 1i is then also controlled from the motor controller 1f in synchronism and accordance with the controlling of the two monochromators.

Alternatively, the device may be used for determining fluorescence excitation spectra, and the emission monochromator lg is then set to a selected fixed wavelength for the fluorescence light, whereas the excitation monochromator le is set to different wavelength values in order to excite the set test area on the coring sample sequentially with light having a different shorter wavelength. The relative intensity of the fluorescent light at the selected fixed wavelength is then recorded by the receiver equipment 1g-k for each value of the excitation wavelength.

Finally, the device may be used for simultaneous recording of excitation and emission fluorescence spectra, the settings of the excitation and emission mono-chromators le, lg being varied in mutual synchronism by the motor controller lf with constant difference in set quantum energy value or light wavelength between the two monochromators. The difference in quantum energy value is then preferably set corresponding to "Stoke's shift".

By suitable utilization of the different operation modes characterizing spectroscopical expressions may be deduced for different oil types and residual oil compositions, even with small remnants of oil in the coring.

## Claims

1. Device for detecting and analysing residual oil in corings and adapted to illuminate samples from corings with shortwave light in order to stimulate excited electron transitions in chemical components of a possible oil in the samples, and thereby actuate these components to emit fluorescence light having a greater wavelength than the exciting light, the device comprising an optical excitation fiber cable (2a) directed at one end towards a selected area of said coring sample (4a), an optical emission fiber cable (2b) directed at one end towards the same area, and transmitter equipment (1c, 1d, 1e) for generating and emitting to the other end of the excitation fiber cable shortwave light for transmission through this fiber cable (2a) and irradiating said area in order to excite possible oil components within the area to emit fluorescence light which may be taken up by said one end of the emission fiber cable for transmission through this fiber cable (2b), as well as receiver equipment (1g, 1h, 1i, 1j, 1k) disposed at the other end of the emission fiber cable for the purpose of receiving the transmitted fluorescence light through the emission fiber cable (2b),
**characterized in that** the transmitter equipment comprises a light source (1c, 1d) operatively adapated to emit broadband shortwave light and an adjustable excitation monochromator (1e) for taking out monochromatic light having a selected wavelength from the supplied broadband light from said light source, and the receiver equipment (1g-k) comprises an adjustable emission monochromator (1g) for receiving the supplied fluorescence spectrum from the examined area through the emission fiber cable (2b) and operatively adapted to measure the relative intensity of the light and analysing its emission spectrum, for thereby determining the amount and type of the detected oil within the area, by deducing the relative intensity of the fluorescence light at different wavelengths by scanning the fluorescence spectrum.

2. Device as claimed in claim 1,
**characterized in that** it comprises a motor controller (lf) for controlling the setting of the excitation and/or emission monochromator (1e, eg).

3. Device as claimed in claim 1 or 2,
**characterized in that** the receiver equipment (1g-k) comprises means (1h), e.g. a photomultiplier (PMT), for converting fluorescence light from the emission monochromator (1g) into analogue electric signals.

4. Device as claimed in claim 3,
**characterized in that** it comprises an interface unit (1i) operatively adapted to convert the analogue electric signals from the converter means (1h) into digital signals to be processed, measured and analysed in a data processing station (1j), producing results indicating amount and type of the examined oil components for display on a monitor unit (1k).

5. Device as claimed in any one of claims 1-4,
**characterized in that** said one ends of both the excitation and emission fiber cable (2a, 2b) are fixed in a common fiber holder (3a) a suitable distance from the coring sample (4a), the holder being preferably mounted on a screen housing (3ab) operatively disposed to be shifted along the surface of the coring sample.

6. Device as claimed in claim 5,
**characterized in that** the fiber holder (3a) is connected with a fiber rig (3b) which is disposed to be guided along all main directions (XYZ) in space.

7. Use of device claimed in any one of claims 1-6 for the purpose of determining fluorescence emission spectra, in which the excitation monochromator (1e) is set to different wavelength values in order to excite the test area in question sequentially by light of different wavelengths, the emission monochromator (lg) being adjusted to different wavelength values for scanning the emission spectrum of the excited fluorescence light for each set excitation wavelength.

8. Use of device as claimed in any one of claims 1-6 for the purpose of determining fluorescence excitation spectra, in which the emission monochromator (1g) is set to a selected fixed wavelength of the fluorescence light, the excitation monochromator (1e) being adjusted to different wavelength values in order to excite the test area in question sequentially with light of different shorter wavelengths, and the relative intensity of the fluorescent light at the selected fixed wavelength being recorded by the receiver equipment (1g-k) for each value of the excitation wavelength.

9. Use of device claimed in claim 2 or any claim dependent on claim 2 for recording of excitation/emission fluorescence spectra, in which the setting of the excitation and emission monochromators (1e, 1g) is varied in mutual synchronism by the motor controller (1f) with a constant difference in set quantum energy values or light wavelength between the two monochromators (1e, 1g).
